# FASCICULE DE BREVET EUROPEEN

(11) **EP 1 262 696 B1**
(45) Date de publication et mention de la délivrance du brevet: **31.08.2005**
(21) Numéro de dépôt: 01870114.4
(22) Date de dépôt: 30.05.2001
(51) Int. Cl.: F16J 15/44, F16J 15/34

(54) **Dispositif de joint d'étanchéité destiné à un palier de turbomachine**
Dichtungsanordnung für Turbomaschinenlager
Sealing arrangement for a turbomachine bearing

(43) Date de publication de la demande: 04.12.2002
(73) Titulaire: Techspace Aero S.A., 4041 Herstal (BE)
(72) Inventeur: Tran, Quac Hung, 4020 Liège (BE); Rouelle, Sébastien, 4560 Bois et Borsu (BE)
(74) Mandataire: Van Malderen, Joelle

(56) Documents cités:
- EP-A- 0 967 424
- US-A- 5 509 664

## Description

### Objet de l'invention

La présente invention se rapporte à un joint d'étanchéité destiné à un palier de turbomachine.

### Etat de la technique

L'utilisation de joints d'étanchéité pour des enceintes de palier de turbomachines qui comprennent un roulement monté entre un manchon solidaire d'un arbre, un support de palier, un support de joint et qui servent à délimiter l'enceinte à huile du roulement de l'enceinte à air de la turbomachine, est bien connue en soi. Il existe essentiellement deux types de tels joints, d'une part des joints radiaux, avec ou sans contact, et d'autre part des joints axiaux.

En particulier, on connaît par les documents EP-0818607, US-3874677, EP-0387122, EP-0491624, EP-1055848 de tels types de joints radiaux.

De même, les documents EP-0967424 et US-4398730 décrivent de tels joints axiaux.

L'utilisation de tels joints axiaux ou radiaux, avec ou sans contact, réduit largement les fuites d'air vers les enceintes à huile et en conséquence la consommation d'huile après passage au travers d'un déshuileur.

Cependant, les répercussions des balourds de l'arbre ne sont pas maîtrisées, des usures résultant de frottements importants peuvent apparaître, ce qui bien entendu limite la durée de vie de tels joints.

Ceci est d'autant plus le cas que, pour des applications particulières, les durées de vie (fréquemment de l'ordre de quelques milliers d'heures) sont nettement insuffisantes.

### Buts de l'invention

La présente invention vise à permettre de résoudre les problèmes de l'état de la technique. En particulier, la présente invention vise à permettre le contrôle des fuites d'air de l'enceinte à air vers l'enceinte à huile tout en évitant que les fuites d'huile de l'enceinte à huile vers l'enceinte à air ne se produisent et ceci quelles que soient les configurations de vol y compris en cas de pression inverse.

La présente invention vise en outre à permettre le contrôle de l'échauffement des joints par les frottements et donc de diminuer l'usure.

La présente invention vise enfin à permettre une solution qui permette d'augmenter la durée de vie de tels joints.

### Principaux éléments caractéristiques

La présente invention vise donc à proposer l'utilisation de joints de carbone axiaux segmentés présentant une portance dans un palier de turbomachine qui permette de résoudre les différents problèmes de l'état de la technique.

La présente invention se rapporte à un dispositif de joint d'étanchéité destiné à un palier turbomachine qui comporte un roulement monté sur un manchon solidaire d'un arbre, ainsi qu'un support de palier, un support de joint, ledit palier permettant de séparer l'enceinte à huile du roulement d'une enceinte à air de la turbomachine, ledit dispositif de joint comprenant un support, un anneau tournant monté sur la partie du manchon située du côté de l'enceinte à huile, un anneau de carbone segmenté permettant l'injection d'air pariétal entre les jonctions de segments successifs de l'anneau de carbone, un système de blocage axial et antirotation de l'anneau de carbone permettant à cet anneau de carbone de rester sur son support à l'état libre et en fonctionnement, ledit système de blocage ne présentant pas de contact avec l'arbre et avec le support, l'anneau de carbone segmenté étant appuyé axialement à l'état libre contre l'anneau tournant par des ressorts et présentant sur leur face radiale un système d'injection d'air pariétal coopérant avec l'anneau tournant par la face radiale, l'anneau tournant coopérant avec les segments de l'anneau de carbone de manière à réaliser des rainures de portance qui permettent d'assurer l'étanchéité dynamique en fonctionnement sans frottement entre les faces radiales. Cet effet de portance permet de supprimer le frottement entre les différents segments de l'anneau de carbone et l'anneau tournant en contrôlant le débit de fuite d'air et permet ainsi d'augmenter la durée de vie du joint de manière quasi infinie.

De préférence, une étanchéité semi-statique est obtenue par la compression des segments de l'anneau de carbone contre le support à l'aide d'au moins un ressort d'expansion circulaire logé dans une gorge, cette étanchéité semi-statique étant usinée directement sur l'anneau de carbone segmenté.

Selon une forme d'exécution préférée, l'anneau tournant est maintenu axialement par un ressort en anneau de type Belle Ville, centré sur le manchon à l'aide d'un système de contrôle de compression du ressort de Belle Ville par l'intermédiaire d'un joint élastique, cet anneau tournant étant entraîné en rotation par des goupilles d'un système de blocage antirotation et axial permet d'assurer le blocage de cet anneau de carbone à l'état libre.

Avantageusement, les formes d'exécution décrites ci-dessus permettent la réalisation d'une injection pariétale de l'air à travers la jonction des segments en vue de favoriser l'effet de portance.

Ceci permet en outre d'obtenir une très faible fuite d'air de l'enceinte d'air vers l'enceinte d'huile tout en évitant qu'il y ait de fuites d'huile de l'enceinte d'huile vers l'enceinte d'air et ceci pour toutes les configurations de vol y compris en cas de pression inverse.

En outre, on observe ainsi une très faible consommation d'huile à travers les déshuileurs.

La présente invention permettra avantageusement également de supporter les déplacements axiaux ou radiaux de l'arbre.

Enfin, la présente invention permet des utilisations très spécifiques comme des applications à très hautes ou à très basses températures (températures cryogéniques).

Enfin, on observe avantageusement par le manque de frottement une usure relativement restreinte et donc une augmentation de la durée de vie importante pour un tel joint.

### Brève description des figures

Les caractéristiques et avantages de l'invention seront mieux compris en se référant aux figures annexées dans lesquelles :

La figure 1 représente, selon une vue en coupe, par un plan passant par l'axe de rotation de l'arbre, une partie de palier de turbomachine comportant un dispositif de joint d'étanchéité conforme à l'invention ;

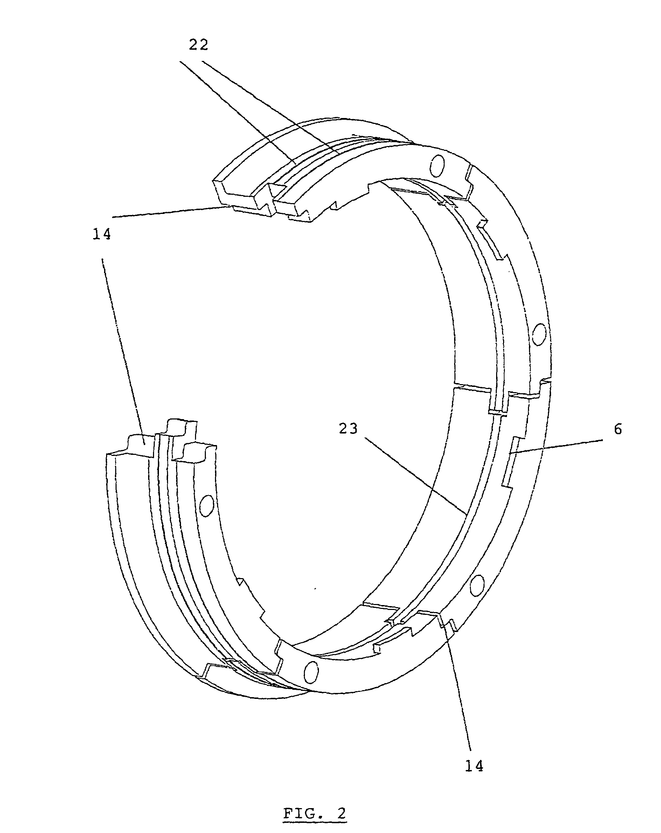

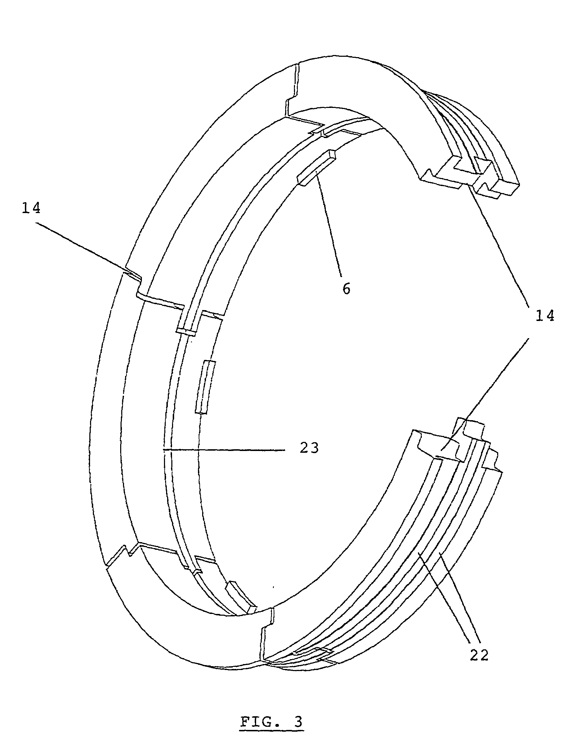

La figure 2 représente une vue de face agrandie de l'anneau de carbone segmenté pour des étanchéités statiques ;

La figue 3 représente une vue par l'arrière agrandie de l'anneau de carbone segmenté pour des étanchéités statiques ;

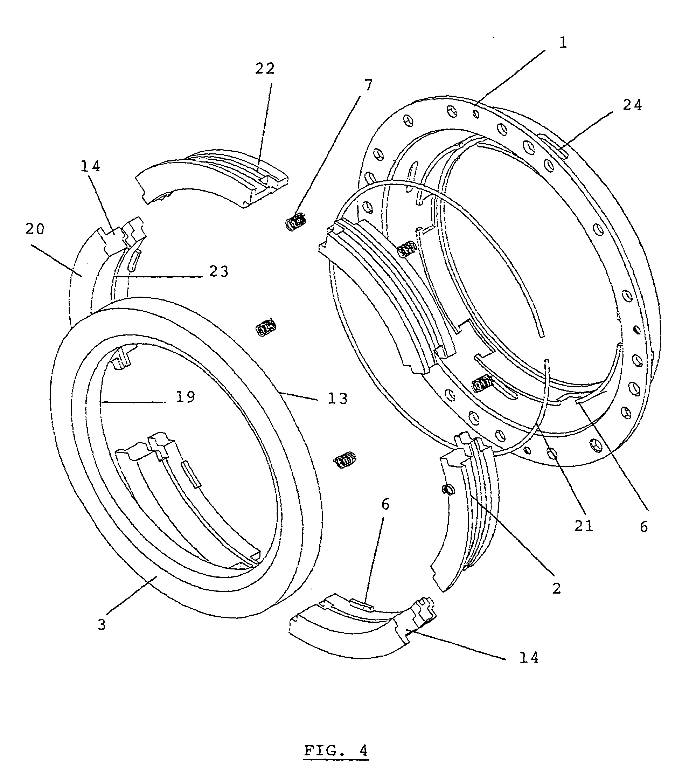

La figure 4 représente une vue éclatée du joint de carbone axial segmenté avec portance et injection pariétale selon la présente invention.

### Description détaillée d'une forme d'exécution

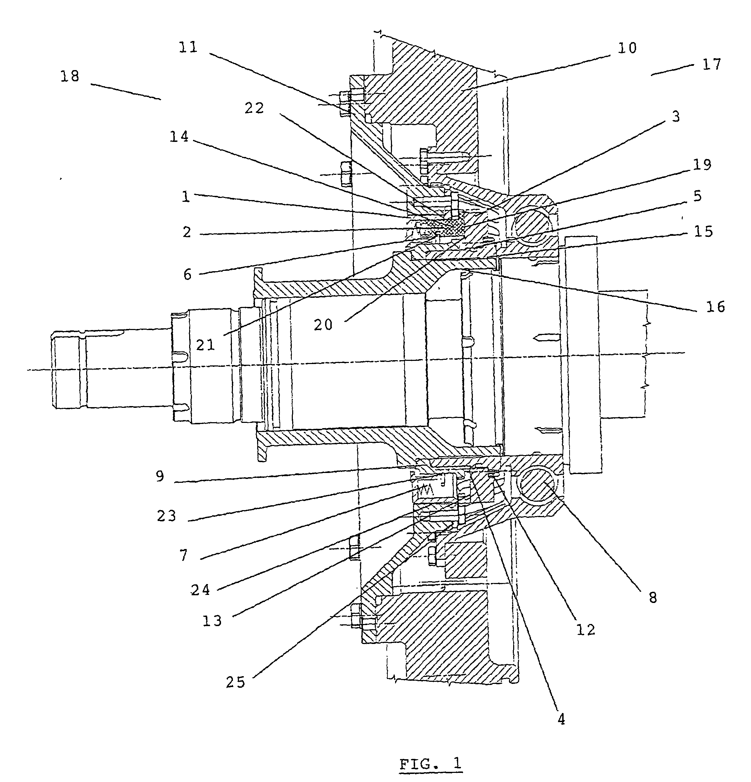

La présente invention sera décrite en se référant aux figures annexées. En particulier la figure 1 représente un palier dans lequel on représente une enveloppe (1) ou support de la partie statique du joint avec des trous (24) de décharge de particules, un anneau de carbone (2) segmenté avec recouvrement étagé et injection d'air pariétale, un système de blocage axial et antirotation (6) qui permet à l'anneau de carbone (2) de rester dans son support (1) à l'état libre et en fonctionnement, un anneau tournant (3) en carbure ou revêtu de carbure avec des rainures générant un effet de portance sur la surface de contact (19) coopérant avec la surface (20) de l'anneau de carbone (2) segmenté.

L'anneau tournant (3) est centré mais non fixé sur un manchon (15), qui est fixé sur l'arbre (16), à l'aide d'un joint élastique (5) permettant le centrage non serrant de l'anneau tournant (3) et résistant aux températures de fonctionnement. L'ensemble se trouve devant un roulement (8) lui-même est monté sur un support (10).

L'anneau tournant (3) est entraîné par des goupilles de blocage antirotation (12) et est maintenu seulement en déplacement axial par un ressort en anneau (4) par exemple de type Belle Ville et un système de cartouches de compression contrôlée (9) afin d'assurer la bonne compression du ressort en anneau (4).

Une charge axiale pour maintenir le contact entre l'anneau de carbone (2) segmenté et l'anneau tournant (3) à l'état libre est obtenue par l'application de ressorts axiaux (7).

L'étanchéité semi-statique secondaire (22), usinée directement dans l'anneau de carbone (2) segmenté, présente les températures limites de fonctionnement de l'anneau de carbone (2) segmenté. Cette étanchéité statique est assurée par un ressort d'expansion circulaire (21) logé dans une gorge (23) qui réalise le contact entre l'anneau de carbone (2) segmenté et le support du joint (1).

L'effet de portance générant sur l'interface de la surface de contact (19) de l'anneau tournant (3) et la surface (20) de l'anneau de carbone (2) segmenté est assuré par les rainures de portance (13) et l'injection d'air pariétale à travers la jonction (14) entre les segments de carbone.

Une enceinte à air (18) assure la pressurisation côté air de l'anneau de carbone (2) segmenté et une enceinte à huile (17) assure la pression côté huile du palier.

Un support de joint (11) assure la fixation de l'enveloppe (1) ou support avec un réglage de la compression de l'anneau de carbone (2) segmenté par la présence d'une cale (25) et sépare ainsi l'enceinte à air (18) de l'enceinte à huile (17).

## Revendications

1. Dispositif de joint d'étanchéité destiné à un palier turbomachine qui comporte un roulement (8) monté sur un manchon (15) solidaire d'un arbre (16), ainsi qu'un support de palier (10), un support de joint (11), ledit palier permettant de séparer l'enceinte à huile (17) du roulement d'une enceinte à air (18) d'une turbomachine, ledit dispositif de joint comprenant un support (1), un anneau tournant (3) pouvant être monté sur la partie du manchon (15) située du côté de l'enceinte à huile (17) **caractérisé par** un anneau de carbone (2) segmenté permettant l'injection d'air pariétal au travers de jonctions (14) entre les segments successifs de carbone (2), un système de blocage (6) axial et antirotation de l'anneau de carbone (2) segmenté permettant à cet anneau de carbone (2) segmenté de rester sur son support (1) à l'état libre et en fonctionnement, ledit système de blocage (6) ne présentant pas de contact avec l'arbre (16) et avec le support (1), l'anneau de carbone (2) segmenté étant appuyé axialement à l'état libre contre l'anneau tournant (3) par des ressorts (7) et présentant sur sa face radiale (20) un système d'injection d'air pariétal coopérant avec l'anneau tournant (3) par la face radiale (19), l'anneau tournant (3) coopérant avec les segments de l'anneau de carbone (2) de manière à réaliser des rainures de portance (13) qui permettent d'assurer l'étanchéité dynamique en fonctionnement sans frottement entre les faces radiales (19, 20).

2. Dispositif de joint d'étanchéité selon la revendication 1 **caractérisé en ce que** une étanchéité semi-statique (22) est assurée par la compression des segments de l'anneau de carbone (2) contre le support (1) à l'aide d'au moins un ressort d'expansion circulaire (21) logé dans une gorge (23), cette étanchéité semi-statique étant usinée directement sur l'anneau de carbone (2) segmenté.

3. Dispositif de joint d'étanchéité selon la revendication 1 ou 2 **caractérisé en ce que** l'anneau tournant (3) est maintenu axialement par un ressort en anneau de type Belle Ville, centré sur le manchon (15) à l'aide d'un système de contrôle de compression (9) du ressort de Belle Ville par l'intermédiaire d'un joint élastique (5), cet anneau tournant (3) étant entraîné en rotation par des goupilles (12).

## Patentansprüche

1. Dichtung für das Lager eines Turbotriebwerks, das ein Wälzlager (8) umfasst, das auf eine Muffe (15), die mit einer Welle (16) verbunden ist, montiert ist, sowie eine Lageraufnahme (10), eine Dichtungsaufnahme (11), wobei das besagte Lager es ermöglicht, den Ölraum (17) des Wälzlagers von einem Luftraum (18) eines Turbotriebwerks zu trennen; die besagte Dichtung umfasst eine Aufnahme (1), einen Drehring (3), der auf den auf der Ölraumseite (17) befindlichen Teil der Muffe (15) montiert werden kann, **gekennzeichnet durch** einen segmentierten Kohlering (2), der das Einblasen von Luft am Umfang **durch** Verbindungsstellen (14) zwischen den aufeinander folgenden Kohleringsegmenten (2) ermöglicht, ein System zur axialen Sicherung (6) und Verdrehsicherung des segmentierten Kohlerings (2), **durch** das dieser segmentierte Kohlering (2) im freien Zustand und im Betrieb in seiner Aufnahme (1) gehalten werden kann; wobei das besagte Sicherungssystem (6) weder die Welle (16) noch die Aufnahme (1) berührt und der segmentierte Kohlering (2) im freien Zustand **durch** Federn (7) in axialer Richtung gegen den Drehring (3) gedrückt wird und auf seiner Radialseite (20) ein System zum Einblasen von Luft am Umfang aufweist, das mit dem Drehring (3) über dessen Radialseite (19) zusammenwirkt, wobei der Drehring (3) mit den Segmenten des Kohlerings (2) zusammenwirkt, so dass Tragnuten (13) erzeugt werden, die während des Betriebs eine dynamische Abdichtung ohne Reibung zwischen den Radialflächen (19, 20) gewährleisten.

2. Dichtung nach Anspruch 1, **dadurch gekennzeichnet, dass** eine halbstatische Abdichtung (22) **dadurch** gewährleistet wird, dass die Segmente des Kohlerings (2) mittels einer kreisförmigen Dehnfeder (21), die in einer Nut (23) sitzt, gegen die Aufnahme (1) gepresst werden, wobei diese halbstatische Dichtung direkt in dem segmentierten Kohlering (2) hergestellt ist.

3. Dichtung nach Anspruch 1 oder 2, **dadurch gekennzeichnet, dass** der Drehring (3) in axialer Richtung durch eine Ringfeder vom Typ Tellerfeder gehalten wird, die durch ein Kompressionsprüfsystem (9) der Tellerfeder mittels einer elastischen Dichtung (5) mittig auf der Muffe (15) gehalten wird, wobei dieser Drehring (3) durch Stifte (12) in Drehung versetzt wird.

## Claims

1. Sealing joint device for a turbomachine bearing comprising a rolling bearing (8) mounted on a sleeve (15) fastened to a shaft (16) and a bearing support (10), a joint support (11), said bearing allowing to separate the oil chamber (17) of the rolling bearing from an air chamber (18) of a turbomachine, said joint device comprising a support (1), a rotary ring (3) that can be fixed onto the part of the sleeve (15) located on the side of the oil chamber (17), **characterised by** a segmented carbon ring (2) allowing the injection of parietal air through junctions (14) between the successive carbon segments (2), an axial anti-rotation blocking system (6) of the segmented carbon ring (2) allowing this segmented carbon ring (2) to remain on its support (1) in the free state and in operation, said blocking system (6) presenting no contact with the shaft (16) and the support (1), the segmented carbon ring (2) being axially leaning in the free state against the rotary ring (3) by springs (7) and presenting on its radial face (20) an injection system for parietal air co-operating with the rotary ring (3) by the radial face (19), the rotary ring (3) co-operating with the segments of the carbon ring (2) so as to achieve lift slots (13) that allow to ensure dynamic seal in operation without friction between the radial faces (19, 20).

2. Sealing joint device according to Claim 1, **characterised in that** semi-static sealing (22) is obtained by compressing the segments of the carbon ring (2) against the support (1) by means of at least one annular expansion spring (21) housed in a groove (23), this semi-static sealing being directly machined on the segmented carbon ring (2).

3. Sealing joint device according to Claim 1 or 2, **characterised in that** the rotary ring (3) is axially maintained by an annular spring of the Belle Ville type, centred on the sleeve (15) by means of a control system for the compression (9) of the Belle Ville spring via an elastic joint (5), this rotary ring (3) being rotated by pins (12).
